# EUROPEAN PATENT APPLICATION

(11) **EP 4 530 556 A1**
(43) Date of publication of application: **02.04.2025**
(21) Application number: 23811508.3
(22) Date of filing: 19.04.2023
(51) Int. Cl.: F24V 30/00, H01M 8/00, H01M 14/00

(54) **POTENTIAL DIFFERENCE GENERATION DEVICE**

(30) Priority: 23.05.2022 JP 2022084169
(71) Applicant: Clean Planet Inc., Minato-ku Tokyo 105-0022 (JP)
(72) Inventor: IWAMURA, Yasuhiro, Sendai-shi, Miyagi 980-8577 (JP); ITOH, Takehiko, Tokyo 105-0022 (JP); YAMAUCHI, Shinobu, Tokyo 105-0022 (JP); TAKAHASHI, Tomonori, Tokyo 105-0022 (JP); YOSHINO, Hideki, Tokyo 105-0022 (JP)
(74) Representative: Bandpay & Greuter
(86) International application number: PCT/JP2023/015547
(87) International publication number: WO 2023/228630

(57) **Abstract**

Provided is a potential difference generation device that can directly generate electric power. A potential difference generation device 10 includes: a nanostructure 16A including a base 24 made of a hydrogen storage metal or the like, and a multilayer film 25A provided on the base 24; a first electrode 17 provided on the nanostructure 16A; and a second electrode 18 provided to face the multilayer film 25A, in which the multilayer film 25A has a configuration in which a first layer made of a hydrogen storage metal or the like and having a thickness of less than 1000 nm and a second layer made of a hydrogen storage metal or the like different from that of the first layer and having a thickness of less than 1000 nm are stacked, and a heterogeneous material interface is formed between the first layer and the second layer, the nanostructure 16A is heated, so that hydrogen permeates through or diffuses into the heterogeneous material interface by quantum diffusion, and a charged particle is emitted from the multilayer film 25A, and the charged particle is captured by the second electrode 18, so that a potential difference is generated between the first electrode 17 and the second electrode 18.

## Description

### Technical Field

The present invention relates to a potential difference generation device having a nanostructure in which a first layer and a second layer are stacked, each layer being made of different hydrogen storage metals and having a nano-sized thickness (less than 1000 nm).

### Background Art

In recent years, a heat generation phenomenon has been reported in which a nanostructure made of a hydrogen storage metal or the like generates heat by occluding and discharging hydrogen (see Non-Patent Literature 1). This heat generation phenomenon can obtain heat energy more than that of a chemical reaction, and thus it is expected to be used as an effective heat source or power supply.

The inventors of the present application have previously proposed a heat generating device including a heat generating element including a base made of a hydrogen storage metal or the like and a multilayer film formed on a surface of the base (see Patent Literature 1). The multilayer film has a configuration in which a first layer made of a hydrogen storage metal or the like and having a thickness of less than 1000 nm and a second layer made of a hydrogen storage metal or the like different from that of the first layer and having a thickness of less than 1000 nm are stacked, and a heterogeneous material interface is formed between the first layer and the second layer. By heating the heat generating element made of the hydrogen storage metal or the like as described above by a heater, hydrogen permeates through or diffuses into the heterogeneous material interface by quantum diffusion, and heat is generated.

### Citation List

### Non-Patent Literature

Non-Patent Literature 1: A. Kitamura, A. Takahashi, K. Takahashi, R. Seto, T. Hatano, Y. Iwamura, T. Itoh, J. Kasagi, M. Nakamura, M. Uchimura, H. Takahashi, S. Sumitomo, T. Hioki, T. Motohiro, Y. Furuyama, M. Kishida, H. Matsune, "Excess heat evolution from nanocomposite samples under exposure to hydrogen isotope gases", International Journal of Hydrogen Energy 43 (2018) 16187-16200.

### Patent Literature

Patent Literature 1: WO2018/230447

### Summary of Invention

### Technical Problem

Heat generated by the heat generating element of Patent Literature 1 can be converted into electric power by using, for example, a turbine for utilization. However, there is a problem in that heat loss occurs when converting heat into electric power. Therefore, development of a novel electric power generating device that can generate electric power directly without using heat is desired.

As a result of various studies, the inventors of the present application have discovered a new finding that a charged particle is emitted from a surface of a nanostructure made of a hydrogen storage metal or the like by occluding hydrogen into the nanostructure and causing quantum diffusion of hydrogen. The present invention has been made based on this new finding, and an object thereof is to provide a potential difference generation device that can generate electric power directly.

### Solution to Problem

The potential difference generation device of the present invention includes: a nanostructure including a base made of a hydrogen storage metal, a hydrogen storage alloy, or a proton conductor, and a multilayer film provided on the base; a first electrode provided on the nanostructure; and a second electrode provided to face the multilayer film, in which the multilayer film has a configuration in which a first layer made of a hydrogen storage metal or a hydrogen storage alloy and having a thickness of less than 1000 nm and a second layer made of a hydrogen storage metal or a hydrogen storage alloy different from that of the first layer or made of ceramics and having a thickness of less than 1000 nm are stacked, and a heterogeneous material interface is formed between the first layer and the second layer, the nanostructure is heated, so that hydrogen permeates through or diffuses into the heterogeneous material interface by quantum diffusion, and a charged particle is emitted from the multilayer film, and the charged particle is captured by the second electrode, so that a potential difference is generated between the first electrode and the second electrode.

### Advantageous Effects of Invention

According to the present invention, a potential difference generation device that can generate electric power directly by occluding hydrogen into a nanostructure made of a hydrogen storage metal or the like and causing quantum diffusion of hydrogen can be provided.

### Brief Description of Drawings

Fig. 1 is a schematic diagram showing an outline of a potential difference generation device.
Fig. 2 is a cross-sectional view showing a configuration of a nanostructure.
Fig. 3 is an illustration diagram for illustrating a mechanism in which the nanostructure emits a charged particle.
Fig.4 is a cross-sectional view showing a configuration of another nanostructure.
Fig.5 is a cross-sectional view showing a configuration of yet another nanostructure.
Fig.6 is a schematic diagram showing an outline of an experimental apparatus for conducting a verification test.
Fig.7 is an illustration diagram for illustrating configurations of a nanostructure and a heater of the experimental apparatus.

### Description of Embodiments

Hereinafter, embodiments of the present invention will be described with reference to the drawings. In the following description and drawings, common components are given common reference numerals. Descriptions of the configurations given common reference numerals will be omitted as appropriate.

### [Potential Difference Generation Device]

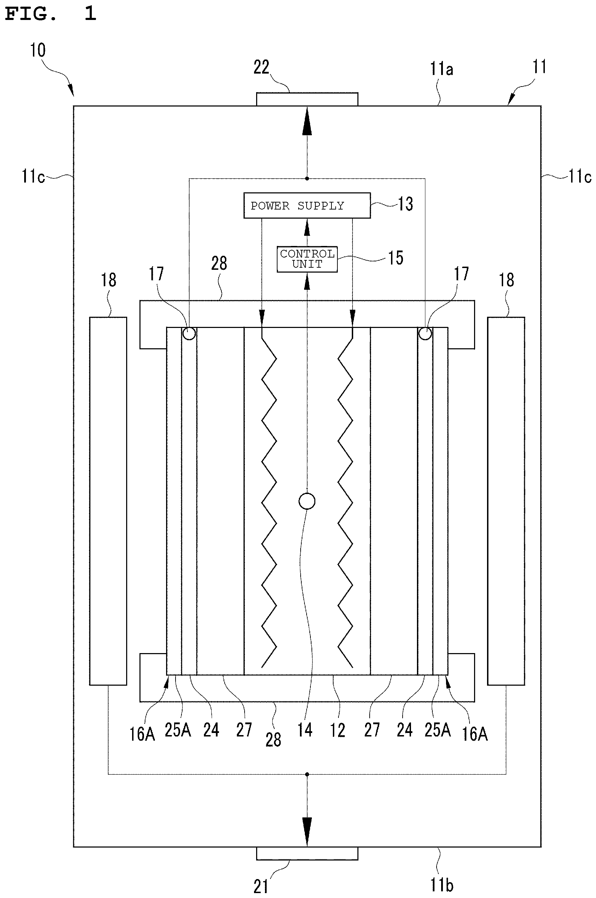

In Fig. 1, a potential difference generation device 10 includes a container 11, a heater 12, a power supply 13, a temperature sensor 14, a control unit 15, a nanostructure 16A, a first electrode 17, and a second electrode 18. The potential difference generation device 10 is configured such that the nanostructure 16A occludes hydrogen and is heated by the heater 12, so that a charged particle emitted during quantum diffusion of hydrogen is captured, and a potential difference is generated between the first electrode 17 and the second electrode 18. By connecting a load such as various electrical devices driven by electric power between the first electrode 17 and the second electrode 18, a current caused by the potential difference flows in the load. The "potential difference generation device" is a novel electric power generating device that can generate electric power directly by occluding hydrogen into a nanostructure in which a first layer and a second layer are stacked, each layer being made of different hydrogen storage metals or the like and having a nano-sized thickness (less than 1000 nm), and then causing quantum diffusion of hydrogen at a heterogeneous material interface formed between the first layer and the second layer, and is also referred to as a "quantum hydrogen battery". A detailed configuration of the potential difference generation device 10 will be described below.

The container 11 is a hollow container having an upper portion 11a, a bottom portion 11b, and a side portion 11c. At least one of the upper portion 11a and the bottom portion 11b of the container 11 is detachable from the side portion 11c, and the container 11 is sealed by attaching the upper portion 11a and the bottom portion 11b to the side portion 11c. In the present embodiment, the heater 12, the power supply 13, the temperature sensor 14, the control unit 15, the nanostructure 16A, the first electrode 17, and the second electrode 18 are housed inside the container 11, but the power supply 13 and the control unit 15 may be provided outside the container 11. A pressure sensor (not shown) that detects an internal pressure of the container 11 is provided inside the container 11. The inside of the container 11 is evacuated by using a vacuum generating device (not shown) such as a vacuum pump. A hydrogen-based gas is introduced into the container 11 by using a hydrogen introduction device (not shown) such as a hydrogen tank that stores the hydrogen-based gas. The hydrogen-based gas refers to a gas that contains isotopes of hydrogen. As the hydrogen-based gas, at least one of a deuterium gas and a protium gas is used. The protium gas includes a mixture of naturally occurring protium and deuterium, that is, a mixture in which an abundance ratio of protium is 99.985% and an abundance ratio of deuterium is 0.015%. In the following description, when there is no need to distinguish between protium and deuterium, a description of "hydrogen" is made.

The container 11 includes a positive terminal 21 and a negative terminal 22. In Fig. 1, the negative terminal 22 is provided on the upper portion 11a, and the positive terminal 21 is provided at the bottom portion 11b, but positions of the positive terminal 21 and the negative terminal 22 are not particularly limited and can be designed as appropriate. The container 11 is made of a material having heat resistance and pressure resistance, such as carbon steel, austenitic stainless steel, heat-resistant non-ferrous alloy steel, or a material that reflects radiant heat, such as Ni, Cu, or Mo. A shape of the container 11 is not particularly limited, and may be a cylindrical shape, an elliptical cylindrical shape, a rectangular cylindrical shape, or the like.

The heater 12 increases a temperature in response to the supplied electric power, and heats the nanostructure 16A. In the present embodiment, the heater 12 is a plate-like ceramic heater having a configuration in which a conductor is provided inside a base made of ceramics. The power supply 13 is electrically connected to the heater 12 and supplies electric power to the heater 12. The temperature sensor 14 detects a temperature of the nanostructure 16A. In the present embodiment, the temperature sensor 14 is a thermocouple built into the heater 12 and is configured to detect the temperature of the nanostructure 16A via the heater 12. The control unit 15 is electrically connected to the power supply 13 and the temperature sensor 14, and controls an output of the power supply 13 based on a detection result of the temperature sensor 14 to set the nanostructure 16A to a desired temperature.

The nanostructure 16A includes a base 24 made of a hydrogen storage metal, a hydrogen storage alloy, or a proton conductor, and a multilayer film 25A (also referred to as a nanostructure film) provided on the base 24. In Fig. 1, the multilayer film 25A is provided on one surface of the base 24, but the multilayer film 25A may be provided on both surfaces of the base 24.

In the present embodiment, the nanostructure 16A is a plate-like member. The nanostructure 16A is provided on both surfaces of the heater 12 via a shielding plate 27. One surface of the shielding plate 27 is in contact with the base 24 of the nanostructure 16A, and the other surface of the shielding plate 27 is in contact with the heater 12. The shielding plate 27 is, for example, a SiO₂ plate. The nanostructure 16A is integrated with the heater 12 and the shielding plate 27 by a holder 28. The holder 28 holds the nanostructure 16A such that a surface of the multilayer film 25A of the nanostructure 16A (surface opposite to the base 24 in Fig. 1) is exposed. The holder 28 is made of, for example, ceramics.

The first electrode 17 is provided on the nanostructure 16A. In Fig. 1, the first electrode 17 is provided on the base 24 of the nanostructure 16A. The first electrode 17 is electrically connected to the negative terminal 22. The first electrode 17 is made of a material that has electrical conductivity, heat resistance, and pressure resistance. Examples of the material for the first electrode 17 include nickel (Ni), palladium (Pd), vanadium (V), titanium (Ti), niobium (Nb), iron (Fe), molybdenum (Mo), platinum (Pt), zirconium (Zr), tantalum (Ta), tungsten (W), and alloys based on these metals.

The second electrode 18 is provided to face the multilayer film 25A. The second electrode 18 is arranged with a predetermined gap in a direction perpendicular to the surface of the multilayer film 25A (left-right direction of paper in Fig. 1). In the present embodiment, the second electrode 18 is supported by a support member (not shown) fixed to an inner wall of the container 11. The second electrode 18 is electrically connected to the positive terminal 21. The second electrode 18 is made of a material that has electrical conductivity, heat resistance, and pressure resistance, and can capture a charged particle emitted from the surface of the multilayer film 25A (described later). Examples of the material for the second electrode 18 include nickel (Ni), palladium (Pd), gold (Au), silver (Ag), copper (Cu), aluminum (Al), iron (Fe), molybdenum (Mo), platinum (Pt), tantalum (Ta), tungsten (W), and alloys based on these metals.

### [Nanostructure]

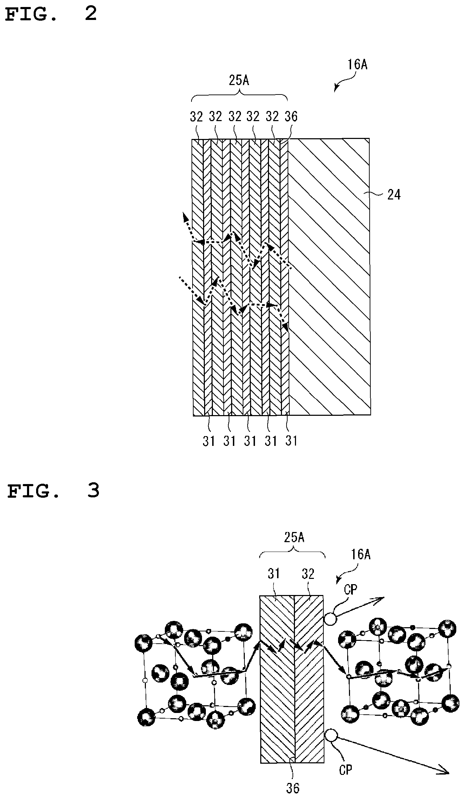

A configuration of the nanostructure 16A will be described in detail with reference to Fig. 2.

An example of a material constituting the base 24 is described below. Examples of hydrogen storage metals include Ni, Pd, V, Nb, Ta, and Ti. Examples of the hydrogen storage alloy include LaNi₅, CaCu₅, MgZn₂, ZrNi₂, ZrCr₂, TiFe, TiCo, Mg₂Ni, and Mg₂Cu. Examples of the proton conductor include a BaCeO₃-based conductor (for example, Ba(Ce_{0.95}Y_{0.05})O_{3-δ}), a SrCeO₃-based conductor (for example, Sr(Ce_{0.95}Y_{0.05})O_{3-δ}), a CaZrO₃-based conductor (for example, CaZr_{0.95}Y_{0.05}O_{3-α}), a SrZrO₃-based conductor (for example, SrZr_{0.9}Y_{0.1}O_{3-α}), β Al₂O₃, and β Ga₂O₃. The base 24 may be implemented by a porous body or a hydrogen permeable film. The porous body has pores having a size through which the hydrogen-based gas can pass. The porous body is made of, for example, a metal, a non-metal, or ceramics. The porous body is preferably made of a material that does not hinder a reaction between the hydrogen-based gas and the multilayer film 25A. The hydrogen permeable film is made of, for example, a hydrogen storage metal or a hydrogen storage alloy. The hydrogen permeable film is a film having a mesh-like sheet.

The multilayer film 25A has a configuration in which a first layer 31 made of a hydrogen storage metal or a hydrogen storage alloy and having a thickness of less than 1000 nm and a second layer 32 made of a hydrogen storage metal or a hydrogen storage alloy different from that of the first layer 31 or made of ceramics and having a thickness of less than 1000 nm are stacked, and a heterogeneous material interface 36 is formed between the first layer 31 and the second layer 32.

In Fig. 2, the multilayer film 25A has a configuration in which the first layer 31 and the second layer 32 are alternately stacked in this order on the surface of the base 24, but the multilayer film 25A is not limited thereto, and may have a configuration in which the second layer 32 and the first layer 31 are alternately stacked in this order on the surface of the base 24. The number of layers of each of the first layer 31 and the second layer 32 may be changed as appropriate. The multilayer film 25A preferably has one or more first layers 31 and one or more second layers 32, and one or more heterogeneous material interfaces 36 are preferably formed.

The first layer 31 is made of, for example, any one of Ni, Pd, Cu, Mn, Cr, Fe, Mg, Co, and an alloy thereof. An alloy for forming the first layer 31 is preferably an alloy made of two or more of Ni, Pd, Cu, Mn, Cr, Fe, Mg, and Co. The alloy for forming the first layer 31 may be an alloy obtained by adding an additive element to Ni, Pd, Cu, Mn, Cr, Fe, Mg, and Co.

The second layer 32 is made of, for example, any one of Ni, Pd, Cu, Mn, Cr, Fe, Mg, Co, an alloy thereof, and SiC. An alloy for forming the second layer 32 is preferably an alloy made of two or more of Ni, Pd, Cu, Mn, Cr, Fe, Mg, and Co. The alloy for forming the second layer 32 may be an alloy obtained by adding an additive element to Ni, Pd, Cu, Mn, Cr, Fe, Mg, and Co.

A combination of the first layer 31 and the second layer 32 is preferably Pd-Ni, Ni-Cu, Ni-Cr, Ni-Fe, Ni-Mg, and Ni-Co when types of elements are expressed as "first layer 31-second layer 32". When the second layer 32 is made of ceramics, the "first layer 31-second layer 32" is preferably Ni-SiC.

A thickness of each of the first layer 31 and the second layer 32 is preferably less than 1000 nm. When the thickness of each of the first layer 31 and the second layer 32 is 1000 nm or more, hydrogen is less likely to permeate through the multilayer film 25A. When the thickness of each of the first layer 31 and the second layer 32 is less than 1000 nm, a nanostructure that does not exhibit a bulk property can be maintained. The thickness of each of the first layer 31 and the second layer 32 is more preferably less than 500 nm. When the thickness of each of the first layer 31 and the second layer 32 is less than 500 nm, a nanostructure that does not exhibit a bulk property at all can be maintained.

When the hydrogen-based gas is supplied to the nanostructure 16A, hydrogen is densely occluded in the base 24 and the multilayer film 25A of the nanostructure 16A. Even if the supply of the hydrogen-based gas is stopped, the nanostructure 16A can maintain a state in which hydrogen is occluded in the base 24 and the multilayer film 25A. When the nanostructure 16A is heated, the hydrogen occluded in the base 24 and the multilayer film 25A hops in a manner of quantum diffusion. It is known that hydrogen is light and hops in a manner of quantum diffusion in hydrogen-occupied sites (octahedral sites or tetrahedral sites) of substance A and substance B.

Fig. 3 shows a mode in which hydrogen atoms in a metal lattice of the first layer 31 permeate through the heterogeneous material interface 36 and move into a metal lattice of the second layer 32 in the nanostructure 16A including the first layer 31 and the second layer 32 each made of a hydrogen storage metal having a face-centered cubic structure.

As shown in Fig. 3, by heating the nanostructure 16A, hydrogen penetrates through or diffuses into the heterogeneous material interface 36 formed between the first layer 31 and the second layer 32 by quantum diffusion, and charged particles CP are emitted from the multilayer film 25A. In the present embodiment, the charged particles CP are positively charged ions. The charged particles CP are considered to be those in which atomic nuclei of the elements (Ni, Cu, or the like) constituting the nanostructure 16A are ejected. The charged particles CP emitted from the multilayer film 25A are captured by the second electrode 18 (see Fig. 1) that is provided to face the multilayer film 25A. As a result, the second electrode 18 that captures the charged particles CP has a positive potential, the first electrode 17 provided on the base 24 of the nanostructure 16A has a negative potential, and a potential difference is generated between the first electrode 17 and the second electrode 18.

By heating the nanostructure 16A, hydrogen penetrates through or diffuses into the heterogeneous material interface 36 by quantum diffusion, heat (hereinafter, referred to as excess heat) having a temperature equal to or higher than a temperature at which the nanostructure 16A is heated is generated.

An example of a method for manufacturing the nanostructure 16A will be described. First, the base 24 formed into a plate shape is prepared, and then the multilayer film 25A is formed on the base 24 by a sputtering method. Accordingly, the plate-like nanostructure 16A can be manufactured. When forming the base 24, it is preferable to form the base 24 thicker than the first layer 31 and the second layer 32. A material for the base 24 is preferably Ni. The first layer 31 and the second layer 32 are preferably formed continuously in a vacuum state. Accordingly, between the first layer 31 and the second layer 32, no natural oxide film is formed and only the heterogeneous material interface 36 is formed. The method for manufacturing the nanostructure 16A is not limited to the sputtering method, and a deposition method, a wet method, a thermal spraying method, an electroplating method, and the like can also be used.

In the present embodiment, the nanostructure 16A is formed into a plate shape, but is not limited thereto. The nanostructure may be formed, for example, into a cylindrical shape or a bottomed cylindrical shape. An example of a method for manufacturing a nanostructure having a bottomed cylindrical shape will be described. First, a base formed into a bottomed cylindrical shape is prepared, and then a multilayer film is formed on an outer surface of the base using a wet film forming method. Accordingly, the nanostructure having a bottomed cylindrical shape can be manufactured. Examples of the wet film forming method include a spin coating method, a spray coating method, and a dipping method. The multilayer film may be formed by using an atomic layer deposition (ALD) method, or the multilayer film may be formed on the base while rotating the base by using a sputtering device including a rotation mechanism that rotates the base. The multilayer film is not limited to being provided on the outer surface of the base, and may be provided on an inner surface of the base, or on two surfaces of the base. The cylindrical nanostructure can also be manufactured by the same manufacturing method.

In the present embodiment, the nanostructure 16A includes the base 24 and the multilayer film 25A, but is not limited thereto.

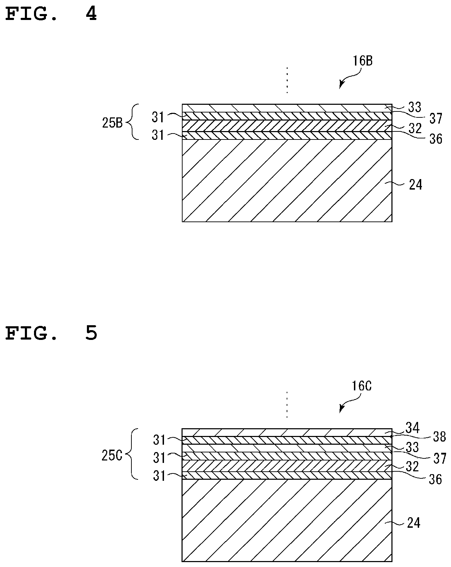

Fig. 4 is a cross-sectional view showing a configuration of another nanostructure 16B. As shown in Fig. 4, the nanostructure 16B includes the base 24 and a multilayer film 25B provided on the base 24. In Fig. 4, the multilayer film 25B is provided on one surface of the base 24, but the multilayer film 25B may be provided on both surfaces of the base 24.

The multilayer film 25B has a configuration in which the first layer 31, the second layer 32, and a third layer 33 made of a hydrogen storage metal, a hydrogen storage alloy, or ceramics different from those of the first layer 31 and the second layer 32 and having a thickness of less than 1000 nm are stacked, and a heterogeneous material interface 37 is formed between the first layer 31 and the third layer 33.

In Fig. 4, the multilayer film 25B has a configuration in which the first layer 31, the second layer 32, the first layer 31, and the third layer 33 are stacked in this order on the surface of the base 24, but the multilayer film 25B is not limited thereto, and may have a configuration in which the second layer 32 and the third layer 33 are arranged in any order on the surface of the base 24 and the first layer 31 is provided between the second layer 32 and the third layer 33. For example, the multilayer film 25B may have a configuration in which the first layer 31, the third layer 33, the first layer 31, and the second layer 32 are stacked in this order on the surface of the base 24. The number of layers of each of the first layer 31, the second layer 32, and the third layer 33 may be changed as appropriate. The multilayer film 25B preferably has one or more third layers 33, and one or more heterogeneous material interfaces 37 are preferably formed.

The third layer 33 is made of, for example, any one of Ni, Pd, Cu, Cr, Fe, Mg, Co, an alloy thereof, SiC, CaO, Y₂O₃, TiC, LaB₆, SrO, and BaO. An alloy for forming the third layer 33 is preferably an alloy made of two or more of Ni, Pd, Cu, Cr, Fe, Mg, and Co. The alloy for forming the third layer 33 may be an alloy obtained by adding an additive element to Ni, Pd, Cu, Cr, Fe, Mg, and Co.

In particular, the third layer 33 is preferably made of any one of CaO, Y₂O₃, TiC, LaB₆, SrO, and BaO. In the nanostructure 16B having the third layer 33 made of any one of CaO, Y₂O₃, TiC, LaB₆, SrO, and BaO, an occluding amount of hydrogen is increased, an amount of hydrogen permeating through the heterogeneous material interface 36 and the heterogeneous material interface 37 is increased, an emission amount of charged particles CP increases, and a high output of excess heat can be achieved. A thickness of the third layer 33 made of any one of CaO, Y₂O₃, TiC, LaB₆, SrO, and BaO is preferably 10 nm or less. By setting the thickness of the third layer 33 to be 10 nm or less, hydrogen can easily permeate through the third layer 33, and an amount of permeating hydrogen can be further increased. The third layer 33 made of any one of CaO, Y₂O₃, TiC, LaB₆, SrO, and BaO may not be formed into a complete film shape and may be formed into an island shape. The first layer 31 and the third layer 33 are preferably formed continuously in a vacuum state. Accordingly, between the first layer 31 and the third layer 33, no natural oxide film is formed and only the heterogeneous material interface 37 is formed.

A combination of the first layer 31, the second layer 32, and the third layer 33 is preferably Pd-CaO-Ni, Pd-Y₂O₃-Ni, Pd-TiC-Ni, Pd-LaB₆-Ni, Ni-CaO-Cu, Ni-Y₂O₃-Cu, Ni-TiC-Cu, Ni-LaB₆-Cu, Ni-Co-Cu, Ni-CaO-Cr, Ni-Y₂O₃-Cr, Ni-TiC-Cr, Ni-LaB₆-Cr, Ni-CaO-Fe, Ni-Y₂O₃-Fe, Ni-TiC-Fe, Ni-LaB₆-Fe, Ni-Cr-Fe, Ni-CaO-Mg, Ni-Y₂O₃-Mg, Ni-TiC-Mg, Ni-LaB₆-Mg, Ni-CaO-Co, Ni-Y₂O₃-Co, Ni-TiC-Co, Ni-LaB₆-Co, Ni-CaO-SiC, Ni-Y₂O₃-SiC, Ni-TiC-SiC, and Ni-LaB₆-SiC when types of elements are expressed as "first layer 31-third layer 33-second layer 32".

By heating the nanostructure 16B, hydrogen penetrates through or diffuses into the heterogeneous material interface 36 and the heterogeneous material interface 37 by quantum diffusion, the charged particles CP are emitted from the multilayer film 25B, and the excess heat is generated. The nanostructure 16B can be manufactured by a method same as the method for manufacturing the nanostructure 16A. The potential difference generation device 10 may include the nanostructure 16B instead of the nanostructure 16A.

Fig. 5 is a cross-sectional view showing a configuration of yet another nanostructure 16C. As shown in Fig. 5, the nanostructure 16C includes the base 24 and a multilayer film 25C provided on the base 24. In Fig. 5, the multilayer film 25C is provided on one surface of the base 24, but the multilayer film 25C may be provided on both surfaces of the base 24.

The multilayer film 25C has a configuration in which the first layer 31, the second layer 32, the third layer 33, and a fourth layer 34 made of a hydrogen storage metal, a hydrogen storage alloy, or ceramics different from those of the first layer 31, the second layer 32, and the third layer 33 and having a thickness of less than 1000 nm are stacked, and a heterogeneous material interface 38 is formed between the first layer 31 and the fourth layer 34.

In Fig. 5, the multilayer film 25C has a configuration in which the first layer 31, the second layer 32, the first layer 31, the third layer 33, the first layer 31, and the fourth layer 34 are stacked in this order on the surface of the base 24, but the multilayer film 25C is not limited thereto, and may have a configuration in which the second layer 32, the third layer 33, and the fourth layer 34 are arranged in any order on the surface of the base 24 and the first layer 31 is provided between the second layer 32 and the third layer 33 and the fourth layer 34. For example, the multilayer film 25C may have a configuration in which the first layer 31, the fourth layer 34, the first layer 31, the third layer 33, the first layer 31, and the second layer 32 are stacked in this order on the surface of the base 24. The number of layers of each of the first layer 31, the second layer 32, the third layer 33, and the fourth layer 34 may be changed as appropriate. The multilayer film 25C preferably has one or more fourth layers 34, and one or more heterogeneous material interfaces 38 are preferably formed.

The fourth layer 34 is made of, for example, any one of Ni, Pd, Cu, Cr, Fe, Mg, Co, an alloy thereof, SiC, CaO, Y₂O₃, TiC, LaB₆, SrO, and BaO. An alloy for forming the fourth layer 34 is preferably an alloy made of two or more of Ni, Pd, Cu, Cr, Fe, Mg, and Co. The alloy for forming the fourth layer 34 may be an alloy obtained by adding an additive element to Ni, Pd, Cu, Cr, Fe, Mg, and Co.

In particular, the fourth layer 34 is preferably made of any one of CaO, Y₂O₃, TiC, LaB₆, SrO, and BaO. In the nanostructure 16C having the fourth layer 34 made of any one of CaO, Y₂O₃, TiC, LaB₆, SrO, and BaO, an occluding amount of hydrogen is increased, an amount of hydrogen permeating through the heterogeneous material interface 36, the heterogeneous material interface 37, and the heterogeneous material interface 38 is increased, an emission amount of charged particles CP increases, and a high output of excess heat can be achieved. A thickness of the fourth layer 34 made of any one of CaO, Y₂O₃, TiC, LaB₆, SrO, and BaO is preferably 10 nm or less. By setting the thickness of the fourth layer 34 to be 10 nm or less, hydrogen can easily permeate through the fourth layer 34, and an amount of permeating hydrogen can be further increased. The fourth layer 34 made of any one of CaO, Y₂O₃, TiC, LaB₆, SrO, and BaO may not be formed into a complete film shape and may be formed into an island shape. The first layer 31 and the fourth layer 34 are preferably formed continuously in a vacuum state. Accordingly, between the first layer 31 and the fourth layer 34, no natural oxide film is formed and only the heterogeneous material interface 38 is formed.

A combination of the first layer 31, the second layer 32, the third layer 33, and the fourth layer 34 is preferably Ni-CaO-Cr-Fe, Ni-Y₂O₃-Cr-Fe, Ni-TiC-Cr-Fe, and Ni-LaB₆-Cr-Fe when types of elements are expressed as "first layer 31-fourth layer 34-third layer 33-second layer 32".

By heating the nanostructure 16C, hydrogen penetrates through or diffuses into the heterogeneous material interface 36, the heterogeneous material interface 37, and the heterogeneous material interface 38 by quantum diffusion, the charged particles CP are emitted from the multilayer film 25C, and the excess heat is generated. The nanostructure 16C can be manufactured by a method same as the method for manufacturing the nanostructure 16A. The potential difference generation device 10 may include the nanostructure 16C instead of the nanostructure 16A.

### [Operation and Effect]

The potential difference generation device 10 includes the nanostructure 16A in which the first layer 31 and the second layer 32 are stacked, each of the layers being made of a hydrogen storage metal or the like and having a nano-sized thickness (less than 1000 nm). The first electrode 17 is provided on the base 24 of the nanostructure 16A, and the second electrode 18 is provided to face the multilayer film 25A of the nanostructure 16A. By heating the nanostructure 16A, hydrogen penetrates through or diffuses into the heterogeneous material interface 36 formed between the first layer 31 and the second layer 32 by quantum diffusion, and the charged particles CP are emitted from the multilayer film 25A. By capturing the emitted charged particles CP by the second electrode 18, the potential difference is generated between the first electrode 17 and the second electrode 18. By connecting a load between the first electrode 17 and the second electrode 18, a current caused by the potential difference flows through the load. As described above, the potential difference generation device 10 can directly generate electric power by occluding hydrogen into the nanostructure 16A and causing quantum diffusion of hydrogen.

### [Verification Test]

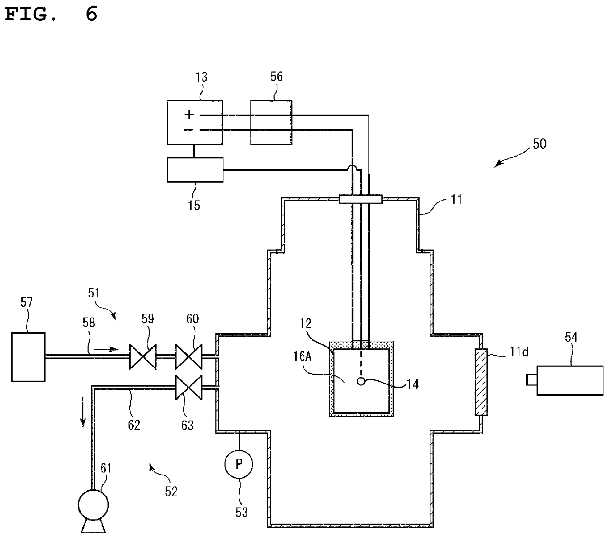

An experimental apparatus 50 shown in Fig. 6 is produced, and a verification test is conducted as to whether the charged particles CP were emitted from the multilayer film 25A.

The experimental apparatus 50 includes the container 11, the heater 12, the power supply 13, the temperature sensor 14, the control unit 15, the nanostructure 16A, a gas introduction portion 51, a gas exhaust portion 52, a pressure sensor 53, and a temperature sensor 54. Two nanostructures 16A are used in the experimental apparatus 50. Each of the nanostructures 16A is a plate-like member, and is formed into a square with a side length of 25 mm in a plan view. In Fig. 6, only one of the two nanostructures 16A is shown, and the other nanostructure 16A is hidden at the back of the page.

The container 11 includes a viewport 11d made of an infrared-transmitting material such as a Kovar glass. The heater 12 is a plate-like ceramic heater having a thickness of 2.2 mm, and is formed into a square having a side length of 25 mm in a plan view. The temperature sensor 14 is built into the heater 12. The heater 12 is connected to the power supply 13 via an ammeter-voltmeter 56 provided outside the container 11. The ammeter-voltmeter 56 detects an input electric power applied from the power supply 13 to the heater 12.

The gas introduction portion 51 includes a gas storage portion 57 that stores the hydrogen-based gas, a gas introduction pipe 58 that connects the gas storage portion 57 and the container 11, and adjustment valves 59, 60 that are provided on the gas introduction pipe 58 and adjust a flow rate and a pressure of the hydrogen-based gas.

The gas exhaust portion 52 has a vacuum generating device 61 such as a dry pump, a gas exhaust pipe 62 connecting the vacuum generating device 61 and the container 11, and an adjustment valve 63 that adjusts the flow rate and the pressure of the hydrogen-based gas.

The pressure sensor 53 detects the pressure inside the container 11. The pressure sensor 53 is electrically connected to the control unit 15, although not shown. The control unit 15 is electrically connected to the vacuum generating device 61, although not shown, controls the vacuum generating device 61 based on a detection result of the pressure sensor 53, and performs vacuum evacuation inside the container 11. Accordingly, the pressure inside the container 11 is controlled.

The temperature sensor 54 is an infrared thermometer provided outside the container 11, and detects a temperature of the surface of the nanostructure 16A via the viewport 11d of the container 11. Two temperature sensors 54 are provided to detect the temperatures of the two nanostructures 16A, respectively. Fig. 6 shows the temperature sensor 54 that detects the temperature of one of the two nanostructures 16A. The temperature sensor 54 that detects the temperature of the other of the two nanostructures 16A is omitted.

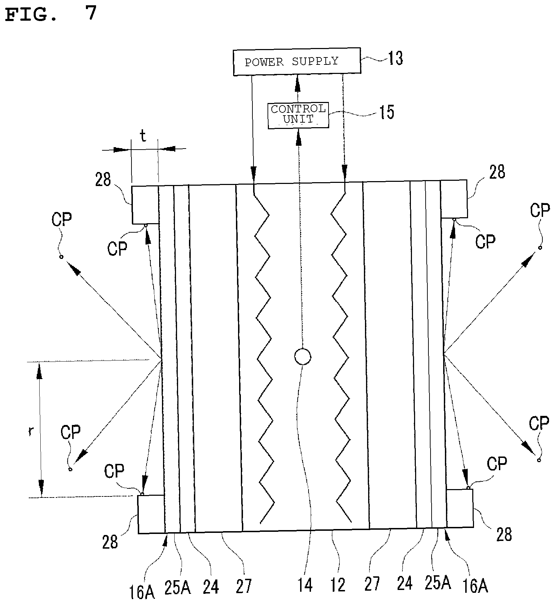

Fig.7 is an illustration diagram for illustrating configurations of the nanostructure 16A and the heater 12 of the experimental apparatus 50 shown in Fig. 6. As shown in Fig. 7, the nanostructure 16A is disposed on each of both surfaces of the heater 12. The shielding plate 27 is provided between the heater 12 and each nanostructure 16A. The shielding plate 27 uses a SiO₂ plate having a thickness of 0.3 mm. The nanostructure 16A is integrated with the heater 12 using the holder 28 with the base 24 facing a heater 12 side and in contact with the shielding plate 27. The base 24 is made of Ni and uses a Ni substrate having a thickness of 0.1 mm. The holder 28 uses Photoveel (registered trademark) manufactured by Ferrotec Ceramics Corporation. The holder 28 has a circular opening that allows the surface of the multilayer film 25A constituting the nanostructure 16A to expose. A thickness t of the holder 28 is 1.5 mm, and a radius r of the opening is 10 mm.

A verification test method will be described below. First, the nanostructure 16A was introduced into the container 11, and the inside of the container 11 was subjected to vacuum evacuation. Next, the nanostructure 16A was baked with the heater 12 to remove water and the like adhering to the surface of the nanostructure 16A. Next, the hydrogen-based gas was introduced into the container 11, and hydrogen was occluded into the nanostructure 16A. Conditions for introducing the hydrogen-based gas were 80°C to 500°C and 100 Pa or more. Next, the inside of the container 11 was subjected to vacuum evacuation, the temperature of the heater 12 was increased, and the temperature of the surface of the nanostructure 16A was set to 600°C.

In the verification test, Experiments 1 to 4 were conducted by changing purity of the hydrogen-based gas or the configuration of the nanostructure 16A. The nanostructure 16A used in Experiment 1 included the multilayer film 25A formed on the surface of the base 24 and obtained by stacking six of the first layer 31 made of Cu and having a thickness of 2 nm and six of the second layer 32 made of Ni and having a thickness of 14 nm. The purity of the hydrogen-based gas used in Experiment 1 was 7 N (99.99999% or more). Experiment 2 was conducted under the same conditions as those in Experiment 1. Experiment 3 was conducted under the same conditions as those in Experiment 1 and Experiment 2, except that the purity of the hydrogen-based gas was 5 N (99.999% or more). Experiment 4 was conducted under the same conditions as those in Experiment 1 and Experiment 2, except that the thickness of the first layer 31 made of Cu was 3 nm, and the thickness of the second layer 32 made of Ni was 13 nm.

In the verification test, by using the heater 12 to heat the nanostructure 16A as described above, hydrogen was subjected to quantum diffusion, and the charged particles CP were emitted. An emission time of the charged particles CP was set to 10 days. It was assumed that the charged particles CP were emitted in a hemispherical shape from a center of the surface of the multilayer film 25A. Since the thickness t of the holder 28 was set to 1.5 mm and the radius r of the opening was set to 10 mm, a solid angle Ω was calculated as 2πrt/(4πr²/2) = t/r = 0.15. An adhesion rate η (also referred to as detection efficiency) of the charged particles CP adhering to the holder 28 was set to 0.1. Therefore, Ωη calculated by multiplying the solid angle Ω by the adhesion rate η was 0.015.

The charged particles CP emitted from the nanostructure 16A and adhered to the holder 28 were analyzed by an inductively coupled plasma mass spectrometry (ICP-MS) method. In the ICP-MS method, the charged particles CP adhering to (captured by) the holder 28 were eluted by using 20 mL of nitric acid aqueous solution obtained by diluting TAMAPURE Nitric Acid AA-10 manufactured by Tama Chemical Industries Co., Ltd. five times with pure water, and a concentration of metals in the eluate was measured. As a measurement result, it was found that a large amount of Cu and Ni were emitted as the charged particles

### CP.

### (1) Measurement Results of Experiment 1

Table 1 summarizes measurement results of Experiment 1.

**[Table 1]**

| | Cu (A) | Cu (B) | Ni (A) | Ni (B) |
|---|---|---|---|---|
| Concentration (ppb) | 3.88E + 02 | 1.21E + 02 | 7.94E + 01 | 5.96E + 01 |
| Concentration (mg/L) | 3.88E - 01 | 1.21E - 01 | 7.94E - 02 | 5.96E - 02 |
| Amount of | 2.00E + 01 | 2.00E + | 2.00E + | 2.00E + |
| solution (mL) | | 01 | 01 | 01 |
| Detected element (mg) | 7.76E - 03 | 2.42E - 03 | 1.59E - 03 | 1.19E - 03 |
| Atomic weight (g) | 6.35E + 01 | 6.35E + 01 | 5.87E + 01 | 5.87E + 01 |
| Number of moles of detected element | 7.36E + 16 | 2.29E + 16 | 1.63E + 16 | 1.22E + 16 |
| Solid angle Ω | 1.50E - 01 | 1.50E - 01 | 1.50E - 01 | 1.50E - 01 |
| Adhesion rate η | 1.00E - 01 | 1.00E - 01 | 1.00E - 01 | 1.00E - 01 |
| Number of moles of emission element | 4.90E + 18 | 1.53E + 18 | 1.09E + 18 | 8.15E + 17 |

In Table 1, "Cu(A)" and "Ni (A)" indicate the measurement results for Cu and Ni in one nanostructure 16A, and "Cu(B)" and "Ni(B)" indicate the measurement results for Cu and Ni in the other nanostructure 16A. The concentration (ppb) was detected by the ICP-MS method. The concentration (mg/L) was calculated from the concentration (ppb). An amount of solution is an amount of nitric acid aqueous solution used in the ICP-MS method. The detected element was calculated as concentration × amount of solution. The number of moles of the detected element was calculated as 6.02 × 10²³ × detected element/atomic weight. The number of moles of the emission element was calculated as number of moles of detected element/solid angle/adhesion rate.

In an evaluation test, an evaluation (current evaluation) of an average electrical output based on the current and an evaluation (energy evaluation) of an average electrical output based on a total amount of electric power were conducted.

Table 2 summarizes conditions and results of a current evaluation and an energy evaluation in Experiment 1. Average energy was assumed to be 5 MeV, and conversion efficiency to electric power was set to 10%.

**[Table 2]**

| | | Cu (A) | Cu (B) | Ni (A) | Ni (B) |
|---|---|---|---|---|---|
| Evaluation condition | Average ion valence | 2.00E + 01 | 2.00E + 01 | 2.00E + 01 | 2.00E + 01 |
| | Total emission time (day) | 1.00E + 01 | 1.00E + 01 | 1.00E + 01 | 1.00E + 01 |
| | Assumed energy (MeV) | 5.00E + 00 | 5.00E + 00 | 5.00E + 00 | 5.00E + 00 |
| | Electric power conversion efficiency (%) | 1.00E + 01 | 1.00E + 01 | 1.00E + 01 | 1.00E + 01 |
| Current evaluation | Current (µA) | 1.82E + 01 | 5.66E + 00 | 4.02E + 00 | 3.02E + 00 |
| | Average electrical output (W) | 9.08E + 00 | 2.83E + 00 | 2.01E + 00 | 1.51E + 00 |
| Energy evaluation | Total amount of electric power (J) | 7.85E + 07 | 2.45E + 07 | 1.74E + 07 | 1.30E + 07 |
| | Average electrical output (W) | 9.08E + 00 | 2.83E + 00 | 2.01E + 00 | 1.51E + 00 |

In the current evaluation, the current was calculated as 1.6 × 10 - 19 × number of moles of emission element × average ion valence/total emission time. The average electrical output in the current evaluation was calculated as assumed energy × electric power conversion efficiency × current. In the energy evaluation, a total amount of electric power (J) was calculated as elementary charge (1.6 × 10 - 19) × number of moles of emission element × average ion valence x assumed energy. An average electrical output (W) in the energy evaluation was calculated as total amount of electric power × electric power conversion efficiency/total emission time. In Experiment 1, in both the current evaluation and the energy evaluation, an electrical output obtained by summing average electrical outputs of "Cu(A)", "Ni(A)", "Cu(B)", and "Ni (B)" was calculated to be 15.4 (W).

From the results of Experiment 1, it could be confirmed that the charged particles CP were emitted from the nanostructure 16A. By configuring the potential difference generation device 10 using the nanostructure 16A, the emitted charged particles CP are captured by the second electrode 18, and a potential difference can be generated between the first electrode 17 and the second electrode 18.

### (2) Measurement Results of Experiment 2

Table 3 summarizes measurement results of Experiment 2.

**[Table 3]**

| | Cu (A) | Cu (B) | Ni (A) | Ni (B) |
|---|---|---|---|---|
| Concentration (ppb) | 1.85E + 02 | 4.25E + 01 | 7.08E + 01 | 3.30E + 01 |
| Concentration (mg/L) | 1.85E - 01 | 4.25E - 02 | 7.08E - 02 | 3.30E - 02 |
| Amount of solution (mL) | 2.00E + 01 | 2.00E + 01 | 2.00E + 01 | 2.00E + 01 |
| Detected element (mg) | 3.70E - 03 | 8.50E - 04 | 1.42E - 03 | 6.60E - 04 |
| Atomic weight (g) | 6.35E + 01 | 6.35E + 01 | 5.87E + 01 | 5.87E + 01 |
| Number of moles of detected element | 3.51E + 16 | 8.06E + 15 | 1.45E + 16 | 6.77E + 15 |
| Solid angle Q | 1.50E - 01 | 1.50E - 01 | 1.50E - 01 | 1.50E - 01 |
| Adhesion rate η | 1.00E - 01 | 1.00E - 01 | 1.00E - 01 | 1.00E - 01 |
| Number of moles of emission element | 2.34E + 18 | 5.37E + 17 | 9.68E + 17 | 4.51E + 17 |

Table 4 summarizes conditions and results of a current evaluation and an energy evaluation in Experiment 2.

**[Table 4]**

| | | Cu (A) | Cu (B) | Ni (A) | Ni (B) |
|---|---|---|---|---|---|
| Evaluation condition | Average ion valence | 2.00E + 01 | 2.00E + 01 | 2.00E + 01 | 2.00E + 01 |
| | Total emission time (day) | 1.00E + 01 | 1.00E + 01 | 1.00E + 01 | 1.00E + 01 |
| | Assumed energy (MeV) | 5.00E + 00 | 5.00E + 00 | 5.00E + 00 | 5.00E + 00 |
| | Electric power conversion efficiency (%) | 1.00E + 01 | 1.00E + 01 | 1.00E + 01 | 1.00E + 01 |
| Current evaluation | Current (µA) | 8.66E + 00 | 1.99E + 00 | 3.59E + 00 | 1.67E + 00 |
| | Average electrical output (W) | 4.33E + 00 | 9.95E - 01 | 1.79E + 00 | 8.36E - 01 |
| Energy evaluation | Total amount of electric power (J) | 3.74E + 07 | 8.60E + 06 | 1.55E + 07 | 7.22E + 06 |
| | Average electrical output (W) | 4.33E + 00 | 9.95E - 01 | 1.79E + 00 | 8.36E - 01 |

Similar to Experiment 1, the average electrical output in the current evaluation and the average electrical output in the energy evaluation were calculated. In Experiment 2, in both the current evaluation and the energy evaluation, an electrical output obtained by summing the average electrical outputs of "Cu(A)", "Ni(A)", "Cu(B)", and "Ni(B)" was calculated to be 8.0 (W) .

From the results of Experiment 2, similar to Experiment 1, it could be confirmed that the charged particles CP were emitted from the nanostructure 16A. By configuring the potential difference generation device 10 using the nanostructure 16A, the emitted charged particles CP are captured by the second electrode 18, and a potential difference can be generated between the first electrode 17 and the second electrode 18.

### (3) Measurement Results of Experiment 3

Table 5 summarizes measurement results of Experiment 3.

**[Table 5]**

| | Cu (A) | Cu (B) | Ni (A) | Ni (B) |
|---|---|---|---|---|
| Concentration (ppb) | 1.29E + 01 | 7.90E + 00 | 4.30E + 00 | 5.10E + 00 |
| Concentration (mg/L) | 1.29E - 02 | 7.90E - 03 | 4.30E - 03 | 5.10E - 03 |
| Amount of solution (mL) | 2.00E + 01 | 2.00E + 01 | 2.00E + 01 | 2.00E + 01 |
| Detected element | 2.58E - 04 | 1.58E - 04 | 8.60E - | 1.02E - |
| (mg) | | | 05 | 04 |
| Atomic weight (g) | 6.35E + 01 | 6.35E + 01 | 5.87E + 01 | 5.87E + 01 |
| Number of moles of detected element | 2.45E + 15 | 1.50E + 15 | 8.82E + 14 | 1.05E + 15 |
| Solid angle Ω | 1.50E - 01 | 1.50E - 01 | 1.50E - 01 | 1.50E - 01 |
| Adhesion rate η | 1.00E - 01 | 1.00E - 01 | 1.00E - 01 | 1.00E - 01 |
| Number of moles of emission element | 1.63E + 17 | 9.99E + 16 | 5.88E + 16 | 6.97E + 16 |

Table 6 summarizes conditions and results of a current evaluation and an energy evaluation in Experiment 3.

**[Table 6]**

| | | Cu (A) | Cu (B) | Ni (A) | Ni (B) |
|---|---|---|---|---|---|
| Evaluation condition | Average ion valence | 2.00E + 01 | 2.00E + 01 | 2.00E + 01 | 2.00E + 01 |
| | Total emission time (day) | 1.00E + 01 | 1.00E + 01 | 1.00E + 01 | 1.00E + 01 |
| | Assumed energy (MeV) | 5.00E + 00 | 5.00E + 00 | 5.00E + 00 | 5.00E + 00 |
| | Electric | 1.00E + | 1.00E + | 1.00E + | 1.00E + |
| | power conversion efficiency (%) | 01 | 01 | 01 | 01 |
| Current evaluation | Current (µA) | 6.04E - 01 | 3.70E - 01 | 2.18E - 01 | 2.58E - 01 |
| | Average electrical output (W) | 3.02E - 01 | 1.85E - 01 | 1.09E - 01 | 1.29E - 01 |
| Energy evaluation | Total amount of electric power (J) | 2.61E + 06 | 1.60E + 06 | 9.41E + 05 | 1.12E + 06 |
| | Average electrical output (W) | 3.02E - 01 | 1.85E - 01 | 1.09E - 01 | 1.29E - 01 |

In Experiment 3, in both the current evaluation and the energy evaluation, an electrical output obtained by summing the average electrical outputs of "Cu (A)", "Ni (A)", "Cu (B)", and "Ni (B)" was calculated to be 0.7 (W).

From the results of Experiment 3, similar to Experiment 1 and Experiment 2, it could be confirmed that the charged particles CP were emitted from the nanostructure 16A. By configuring the potential difference generation device 10 using the nanostructure 16A, the emitted charged particles CP are captured by the second electrode 18, and a potential difference can be generated between the first electrode 17 and the second electrode 18.

In Experiment 3 in which the purity of the hydrogen-based gas was 5 N (99.999% or more), the obtained electrical output was lower than that in Experiment 1 in which the purity of the hydrogen-based gas was 7 N (99.99999% or more). From this result, it is found that impurities such as H₂O, CO₂, and N₂ contained in the hydrogen-based gas affect the generation of the charged particles CP. An emission amount of charged particles CP can be controlled by changing a concentration of the impurities contained in the hydrogen-based gas. When designing the potential difference generation device 10, the desired electrical output can be obtained by changing the concentration of the impurities contained in the hydrogen-based gas. From the results of Experiment 1 to Experiment 3, it is found that the purity of the hydrogen-based gas is preferably 5 N or more and 7 N or less.

### (4) Measurement Results of Experiment 4

Table 7 summarizes measurement results of Experiment 4.

**[Table 7]**

| | Cu (A) | Cu (B) | Ni (A) | Ni (B) |
|---|---|---|---|---|
| Concentration (ppb) | 2.12E + 01 | 3.72E + 01 | 7.00E + | 1.28E + |
| | | | 00 | 01 |
| Concentration (mg/L) | 2.12E - 02 | 3.72E - 02 | 7.00E - 03 | 1.28E - 02 |
| Amount of solution (mL) | 2.00E + 01 | 2.00E + 01 | 2.00E + 01 | 2.00E + 01 |
| Detected element (mg) | 4.24E - 04 | 744E - 04 | 1.40E - 04 | 2.56E - 04 |
| Atomic weight (g) | 6.35E + 01 | 6.35E + 01 | 5.87E + 01 | 5.87E + 01 |
| Number of moles of detected element | 4.02E + 15 | 7.05E + 15 | 1.44E + 15 | 2.63E + 15 |
| Solid angle Q | 1.50E - 01 | 1.50E - 01 | 1.50E - 01 | 1.50E - 01 |
| Adhesion rate η | 1.00E - 01 | 1.00E - 01 | 1.00E - 01 | 1.00E - 01 |
| Number of moles of emission element | 2.68E + 17 | 4.70E + 17 | 9.57E + 16 | 1.75E + 17 |

Table 8 summarizes conditions and results of a current evaluation and an energy evaluation in Experiment 4.

**[Table 8]**

| | | Cu (A) | Cu (B) | Ni (A) | Ni (B) |
|---|---|---|---|---|---|
| Evaluation | Average ion valence | 2.00E + | 2.00E | 2.00E + | 2.00E + |
| condition | | 01 | + 01 | 01 | 01 |
| | Total emission time (day) | 1.00E + 01 | 1.00E + 01 | 1.00E + 01 | 1.00E + 01 |
| | Assumed energy (MeV) | 5.00E + 00 | 5.00E + 00 | 5.00E + 00 | 5.00E + 00 |
| | Electric power conversion efficiency (%) | 1.00E + 01 | 1.00E + 01 | 1.00E + 01 | 1.00E + 01 |
| Current evaluation | Current (µA) | 9.93E - 01 | 1.74E + 00 | 3.55E - 01 | 6.48E - 01 |
| | Average electrical output (W) | 4.96E - 01 | 8.71E - 01 | 1.77E - 01 | 3.24E - 01 |
| Energy evaluation | Total amount of electric power (J) | 4.29E + 06 | 7.52E + 06 | 1.53E + 06 | 2.80E + 06 |
| | Average electrical output (W) | 4.96E - 01 | 8.71E - 01 | 1.77E - 01 | 3.24E - 01 |

In Experiment 4, in both the current evaluation and the energy evaluation, an electrical output obtained by summing the average electrical outputs of "Cu (A)", "Ni (A)", "Cu (B)", and "Ni (B)" was calculated to be 1.9 (W).

From the results of Experiment 4, similar to Experiment 1 to Experiment 3, it can be confirmed that the charged particles CP were emitted from the nanostructure 16A. By configuring the potential difference generation device 10 using the nanostructure 16A, the emitted charged particles CP are captured by the second electrode 18, and a potential difference can be generated between the first electrode 17 and the second electrode 18.

In Experiment 4 in which the thickness of the first layer 31 was 3 nm and the thickness of the second layer 32 was 13 nm, the obtained electrical output was lower than that in Experiment 1 in which the thickness of the first layer 31 was 2 nm and the thickness of the second layer 32 was 14 nm. From this result, it is found that a ratio of the thickness of the first layer 31 to the thickness of the second layer 32 affects the generation of the charged particles CP. By changing the ratio of the thickness of the first layer 31 to the thickness of the second layer 32, the emission amount of charged particles CP can be controlled. When designing the potential difference generation device 10, the desired electrical output can be obtained by changing the ratio of the thickness of the first layer 31 to the thickness of the second layer 32.

The present invention is not limited to the above embodiment and can be modified as appropriate without departing from the scope of the present invention.

In the above embodiment, the potential difference generation device 10 is configured to heat the nanostructure 16A by using the heater 12, but is not limited thereto. Instead of using the heater 12 and the power supply 13, the potential difference generation device 10 may be configured to heat the nanostructure 16A by using waste heat from a vehicle, a power plant, or the like. For example, by providing a flow path through which a heat medium heated by waste heat flows, the nanostructure 16A can be heated by the heat medium. In this case, the control unit 15 controls a flow rate of the heat medium based on the temperature of the nanostructure 16A detected by the temperature sensor 14, thereby setting the nanostructure 16A to a desired temperature.

In the above embodiment, the heater 12 is a plate-like ceramic heater, but is not limited thereto, and may be a cylindrical heater. When the nanostructure 16A is formed into a cylindrical shape or a bottomed cylindrical shape, by disposing a cylindrical heater inside the nanostructure 16A, the nanostructure 16A can be efficiently heated.

In the above embodiment, the first electrode 17 is provided on the base 24 of the nanostructure 16A, but is not limited thereto. The first electrode 17 may be provided on the multilayer film 25A. For example, a silicon substrate doped with impurities to be conductive may be used as the first electrode 17. The base 24 may be made of a conductive material, so that the base 24 may be used as the first electrode.

In the above embodiment, the second electrode 18 is supported by the support member (not shown) fixed to the inner wall of the container 11. The second electrode 18 may be configured to be supported by, for example, the holder 28. An insulator may be separately provided between the surface of the multilayer film of the nanostructure and the second electrode, and the second electrode may be configured to be supported by the insulator. For example, a silicon substrate doped with impurities to be conductive may be used as the second electrode 18.

Electric power obtained by the potential difference generation device 10 can be used for various purposes. For example, by taking advantage of characteristics of the potential difference generation device 10, that is, compactness and no movable portion (rotation body or the like), it is possible to use the potential difference generation device 10 for constantly charging a device currently driven by a battery in a moving body such as an electric vehicle. By appropriately selecting a capacity of the potential difference generation device 10, it is expected that drones, robots, electric vehicles, submarines, airplanes, spaceships, or the like that do not need to be charged can be realized. An application to a power supply for communication infrastructure in a place where access is difficult, such as a remote island, a jungle, and deep sea, is possible.

Heat (excess heat) generated by the nanostructure 16A can be used for various purposes. By using a thermoelectric conversion unit thermally connected to the nanostructure 16A, heat of the nanostructure 16A can be converted into electric power by the thermoelectric conversion unit. Electric power obtained by conversion by the thermoelectric conversion unit may be supplied to the heater 12. The potential difference generation device 10 can save electric power by supplying electric power obtained by conversion by the thermoelectric conversion unit to the heater 12. Even if the power supply 13 is turned on only when the potential difference generation device 10 is started, and the power supply 13 is turned off after the charged particles CP are emitted from the nanostructure 16A, it is possible to continue to operate the potential difference generation device 10 by using electric power obtained by conversion by the thermoelectric conversion unit.

The excess heat generated by the nanostructure 16A can be recovered using a heat medium. The heat medium is heated by the nanostructure 16A and becomes high temperature. The high-temperature heat medium is used, for example, in home heating, home water heaters, automobile heaters, agricultural heating machines, road heaters, heat sources for seawater desalination, and auxiliary heat sources for geothermal power generation. The heat medium may be a gas or liquid, and is preferably one that has excellent thermal conductivity and is chemically stable. Examples of the gas include a helium gas, an argon gas, a hydrogen gas, a nitrogen gas, water vapor, air, and carbon dioxide. Examples of the liquid include water, a molten salt (KNO₃ (40%) to NaNO₃ (60%) or the like), and a liquid metal (for example, Pb). A multiphase heat medium in which solid particles are dispersed in a gas or liquid may be used as the heat medium. The solid particles are metals, metal compounds, alloys, ceramics, or the like. Examples of the metals include copper, nickel, titanium, and cobalt. Examples of the metal compounds include oxides, nitrides, and silicides of the above metals. Examples of the alloys include stainless steel and chrome molybdenum steel. Examples of the ceramics include alumina.

Examples of applications of the excess heat generated by the nanostructure 16A include a heat exchanger and a power unit. Examples of the heat exchanger include a device that performs heat exchange between a heat medium and a gas, a device that performs heat exchange between a heat medium and a liquid, and a device that performs heat exchange between a heat medium and a solid. The device that performs heat exchange between a heat medium and a gas is used for air conditioning, preheating air to be supplied to a combustion device, generating hot air for drying or heating, and the like. Examples of the combustion device include a boiler, a rotary kiln, a metal heat treatment furnace, a metal processing heating furnace, a hot air stove, a ceramic firing furnace, an oil refining tower, a dry distillation furnace, and a drying furnace. The device that performs heat exchange between a heat medium and a liquid is used as a heat source for a boiler, used for oil heating, used as a chemical reaction tank, and the like. The device that performs heat exchange between a heat medium and a solid is used as a double pipe rotary heating machine, used for heating particulate substances in a double pipe, and the like. Examples of the power unit include a gas turbine, a steam turbine, a stirling engine, and an organic rankine cycle system (ORCS).

### Reference Sign List

10 potential difference generation device
11 container
12 heater
13 power supply
14 temperature sensor
15 control unit
16A, 16B, 16C nanostructure
17 first electrode
18 second electrode
24 base
25A, 25B, 25C multilayer film
31 first layer
32 second layer
33 third layer
34 fourth layer
36, 37, 38 heterogeneous material interface

## Claims

1. A potential difference generation device, comprising:
a nanostructure including a base made of a hydrogen storage metal, a hydrogen storage alloy, or a proton conductor, and a multilayer film provided on the base;
a first electrode provided on the nanostructure; and
a second electrode provided to face the multilayer film, wherein
the multilayer film has a configuration in which a first layer made of a hydrogen storage metal or a hydrogen storage alloy and having a thickness of less than 1000 nm and a second layer made of a hydrogen storage metal or a hydrogen storage alloy different from the first layer or made of ceramics and having a thickness of less than 1000 nm are stacked, and a heterogeneous material interface is formed between the first layer and the second layer,
by heating the nanostructure, hydrogen penetrates through or diffuses into the heterogeneous material interface by quantum diffusion, and a charged particle is emitted from the multilayer film, and
by capturing the charged particle by the second electrode, a potential difference is generated between the first electrode and the second electrode.

2. The potential difference generation device according to claim 1, wherein
purity of a hydrogen-based gas supplied to the nanostructure is 5 N or more and 7 N or less.

3. The potential difference generation device according to claim 1, further comprising:
a temperature sensor configured to detect a temperature of the nanostructure;
a heater configured to heat the nanostructure; and
a control unit configured to control the heater based on the temperature detected by the temperature sensor.
